(19) Europäisches Patentamt
European Patent Office
Office européen des brevets

(11) **EP 3 551 406 B1**

(12) **EUROPEAN PATENT SPECIFICATION**

(45) Date of publication and mention
of the grant of the patent:
**30.08.2023 Bulletin 2023/35**

(21) Application number: **17878931.9**

(22) Date of filing: **08.12.2017**

(51) International Patent Classification (IPC):
**B28B 1/54** *(2006.01)*          **B28B 11/24** *(2006.01)*
**B28C 5/00** *(2006.01)*          **C04B 7/147** *(2006.01)*
**E01C 5/06** *(2006.01)*          **E01C 5/20** *(2006.01)*
**C04B 40/02** *(2006.01)*         **C04B 28/08** *(2006.01)*
**C04B 111/21** *(2006.01)*

(52) Cooperative Patent Classification (CPC):
(C-Sets available)
**B28B 11/245; B28B 1/54; C04B 28/08;**
**C04B 40/0231;** C04B 2111/21; E01C 5/06;
Y02W 30/91                                    (Cont.)

(86) International application number:
**PCT/CA2017/051489**

(87) International publication number:
**WO 2018/102931 (14.06.2018 Gazette 2018/24)**

(54) **LANDSCAPING PRODUCT AND METHOD OF PRODUCTION THEREOF**

ERZEUGNIS FÜR DEN LANDSCHAFTSBAU UND VERFAHREN ZU DESSEN HERSTELLUNG

PRODUIT D'AMÉNAGEMENT PAYSAGER ET PROCÉDÉ DE PRODUIR CE PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2016 US 201662431886 P**

(43) Date of publication of application:
**16.10.2019 Bulletin 2019/42**

(73) Proprietor: **Carbicrete Inc.**
**Westmount, QC H3Y 2X8 (CA)**

(72) Inventors:
• **SHAO, Yixin**
**Ile-Perrot, Québec J7V 8S6 (CA)**
• **MAHOUTIAN, Mehrdad**
**Montreal, Québec H3G 1C2 (CA)**

(74) Representative: **Weickmann, Hans**
**Weickmann & Weickmann**
**Patent- und Rechtsanwälte PartmbB**
**Postfach 860 820**
**81635 München (DE)**

(56) References cited:
WO-A1-2009/132692      WO-A1-2015/139121
WO-A1-2015/139121      WO-A1-2016/082030
FR-A1- 2 735 804       US-A- 5 744 078
US-A1- 2001 023 655    US-A1- 2005 160 946
US-A1- 2014 328 624    US-A1- 2016 272 545

• MAHOUTIAN MEHRDAD ET AL: "Carbonation and hydration behavior of EAF and BOF steel slag binders", MATERIALS AND STRUCTURES, LONDON, GB, vol. 48, no. 9, 23 July 2014 (2014-07-23), pages 3075-3085, XP035519183, ISSN: 1359-5997, DOI: 10.1617/S11527-014-0380-X [retrieved on 2014-07-23]
• Gang Ye: "Carbon dioxide uptake by concrete through early-age curing", , 30 September 2003 (2003-09-30), XP055334309, MCGILL University ISBN: 978-0-494-53315-4 Retrieved from the Internet: URL:http://digitool.library.mcgill.ca/webc lient/StreamGate?folder_id=0&dvs=148413986 6849~922 [retrieved on 2017-01-11]

- **WANG CHANG-LONG ET AL: "Experimental Study on Steel Slag and Slag Replacing Sand in Concrete", MODELLING, SIMULATION AND OPTIMIZATION, 2008. WMSO '08. INTERNATIONAL WORKSHOP ON, IEEE, PISCATAWAY, NJ, USA, 27 December 2008 (2008-12-27), pages 451-455, XP031410250, DOI: 10.1109/WMSO.2008.13 ISBN: 978-0-7695-3484-8**

(52) Cooperative Patent Classification (CPC): (Cont.)

C-Sets
**C04B 28/08, C04B 7/02, C04B 14/108, C04B 14/12, C04B 14/28, C04B 18/027, C04B 18/142, C04B 18/143, C04B 20/008, C04B 24/2647, C04B 40/0231, C04B 40/0259; C04B 28/08, C04B 7/02, C04B 14/108, C04B 14/12, C04B 14/28, C04B 18/027, C04B 18/142, C04B 18/143, C04B 20/008, C04B 40/0231, C04B 40/0259, C04B 2103/302, C04B 2103/304, C04B 2103/65**

**Description**

**FIELD OF THE DISCLOSURE**

The present subject-matter relates to landscaping products comprising steel slag, compositions and processes for preparing same.

**BACKGROUND OF THE DISCLOSURE**

Traditionally, production of the cement-based landscaping products uses Portland cement as binder. The production of cement is an energy-intensive and carbon-emitting process. Production of each ton of Portland cement emits 0.8 tonne of carbon dioxide to the atmosphere. In addition, cement production consumes considerable amounts of natural resources. If Portland cement can be replaced by alternative binders, the carbon dioxide emission to the atmosphere can be significantly reduced.

Steel slag has shown the potential to replace cement as an alternative binder if carbonation activation is performed. Steel slag is well known by its reaction with carbon dioxide. Replacing cement with the activated steel slag in the production of landscaping products will reduce the energy consumption, the natural resource consumption, and the total carbon emission. The reduction of carbon dioxide emission comes from two factors; a) the elimination of Portland cement usage in the product, b) the permanent storage of carbon dioxide in the landscaping product due to the carbonation activation process.

**Varieties Of Landscaping Products**

Landscaping products include various types of products, such as cast stone, pavers, slabs, retaining block walls, caps, curbs, edges, steps and facade.

For example, a paver is a paving stone, tile, brick or brick-like piece of concrete commonly used as exterior flooring. Concrete pavers are commercially made by pouring a mixture of aggregate, Portland cement, admixtures and pigments (if required) into a mold with various shapes and allowing to set. Although each of those ingredients demonstrates its own unique microstructure property, all of them are similarly constructed of aggregate-skeleton, binding medium, and air voids. Interlocking concrete pavers and stone pavers are different types of paver. When putting the interlocking pavers together, no cementitious paste, chemical admixture or retaining method is usually used; instead the weight of the paver itself is used to assemble them together. Pavers can be used to cover roads, driveways, patios, walkways, and any outdoor platform.

Retaining walls are precast concrete products that rely primarily on their mass for stability. The retaining walls can be easily stacked on top of each another. Retaining walls can be used in residential and commercial applications. The retaining walls are produced in different size, feature, texture and style.

Cast stone is considered as one of the concrete masonry products that best imitates natural-cut stone and is mostly used in architectural applications. The application of cast stone products varies from architectural to structures and garden ornaments.

Precast concrete curbs are installed along a street or roadway, forming an edge for a sidewalk. Precast concrete curbs are available in convenient lengths and are generally quick and easy to install.

Precast concrete facade panels are used to provide a better finishing to exterior and interior walls. These panels are used to clad all or part of building facades or free-standing walls used for landscaping, soundproofing, and security walls.

Wang Chang-Long et al. (Modelling, Simulation and Optimization, WMSO '08) reports the results of a study in which sand was replaced with steel slag and slag in concrete comprising Portland cement and superplasticizer.

WO2015/139121 discloses a building product made from granular material and a binder that includes steel slag. The building product is produced by a process including the steps of combining the granular material and the binder and then curing the combined granular material and binder with carbon dioxide. WO2015/139121 does not disclose the use of a chemical admixture, such as a water reducer or water repellent.

WO2016/082030 discloses methods for preparing a mix containing cement, by contacting a mixture of a cement binder, e.g., hydraulic cement and water, and, optionally, other components such as aggregate (a "cement mix", or "concrete," e.g., a "hydraulic cement mix") with carbon dioxide during some part of the mixing of the cement mix, e.g., hydraulic cement mix. One or more supplementary cementitious materials (SCMs) and/or cement replacements may be added to the mix at the appropriate stage for the particular SCM or cement replacement. Exemplary SCMs include blast furnace slag, fly ash, silica fume, natural pozzolans (such as metakaolin, calcined shale, calcined clay, volcanic glass, zeolitic trass or tuffs, rice husk ash, diatomaceous earth, and calcined shale), and waste glass. WO2016/082030 does not disclose the use of steel slag.

Mahoutian Mehrdad et al. (Materials and structures, vol.48, no. 9, July 2014, 3075-3085) reports the results of a study related to the carbonation and hydration behavior of electrical arc furnace steel slag and basis oxygen furnace steel slag. Carbonation activation of steel slags can accelerate early strength which can be three to four times greater than hydration strength. With carbonation activation, steel slag can serve as a binder for making slag-bond building products.

## SUMMARY OF THE DISCLOSURE

An aspect of the disclosure relates to a process for preparing landscaping products comprising:

i) mixing a dry part; and a liquid part; wherein said dry part is comprising an aggregate and a binder, wherein said binder is consisting of steel slag and optionally cement; and wherein said liquid part is comprising water and a chemical admixture selected from water repellents, water reducers, air entraining admixture and efflorescence reducing/controlling admixture, wherein said water reducers are meeting the requirements of ASTM C494;
ii) molding and compacting the mixture of step i) to a shaped product having an initial water to slag ratio W/S;
iii) optionally reducing the initial water to slag ratio of said shaped product of step ii) to provide a shaped product having a pre-carbonation water to slag ratio W/S; and
iv) curing the shaped product of step ii) or iii) with carbon dioxide to provide said landscaping products.

A further aspect of the disclosure relates to a carbon dioxide cured landscaping product comprising:

a) an aggregate;
b) a chemical admixture selected from water repellents, water reducers, air entraining admixture and efflorescence reducing/controlling admixture, wherein said water reducers are meeting the requirements of ASTM C494, and
c) a binder consisting of steel slag and optionally cement.

A further aspect of the disclosure relates to a landscaping product prepared by the process described herein.

## BRIEF DESCRIPTION OF THE DRAWINGS

In order to illustrate how embodiments of this disclosure may be carried into effect, reference will now be made to the accompanying drawings in which:

FIG. 1 is a schematic representation of an exemplary carbonation set-up;
FIG. 2 is an XRD of hybrid EAF and BOF (EBH) slag as received and after carbonation; and
FIG. 3 is TG and DTG for carbonated and as-received EAF and EAF-BOF hybrid slag compacts

## DETAILED DESCRIPTION OF THE DISCLOSURE

Landscaping products include: cast stone, pavers, slabs, retaining blocks walls, edges, curbs, caps, steps and facade. Various standards may apply with regard to expected performance of the products. The following standards are useful references to better understand the typical technical performances required for representative products.
As discussed herein, reference to a landscaping product comprising a binder consisting of steel slag (and optionally cement) is understood to mean that the binder in the final landscaping product is a carbon dioxide-cured binder, or in other words a carbon dioxide-cured landscaping products. Therefore, the expressions landscaping products/ dioxide-cured landscaping products as well as binder/ carbon dioxide-cured binder can be used interchangeably or substituted anywhere in the specification if required to improve clarity.
Retaining wall: ASTM C 1372: Standard Specification for Dry-Cast Segmental Retaining Wall Units

Minimum Compressive Strength: 20.7 MPa
Maximum water absorption: 208 kg/m$^3$ (about 8.5 %)

Architectural cast stone: ASTM C1364: Standard Specification for Architectural Cast Stone

Minimum strength: 45 MPa
Maximum water absorption in cold water: 6%
Maximum water absorption in hot water: 10%

Paving stones : ASTM C936: Standard Specification for Solid Concrete Interlocking Paving Units

Minimum Compressive Strength: 55 MPa
Maximum water absorption: 5%

American Standard Test Method : Standard Specification for Solid Concrete Interlocking Paving Units (This specification is intended for interlocking concrete pavers used in the construction of paved surfaces and manufactured from cementitious materials, aggregates, chemical admixtures, and other constituents, such as integral water repellents. The specification also offers guidelines for physical requirements, sampling and testing, visual inspection, and rejection of specimens.)

Canadian Standard Association - CSA A231.2: Precast concrete paving slabs/precast concrete pavers. This Standard specifies requirements for concrete paving slabs manufactured from hydraulic cement concrete to be used in the construction of pavement and roof coverings. This Standard includes units with architectural finishes or tactile surfaces.

Curb: BNQ 2624-210: Prefabricated Concrete Curbs - Dimensional, Geometric and Physical Characteristics Minimum 28-day compressive strength: 32 MPa

As discussed below, steel slag is used herein as the sole component of a binder or the main component of a binder together with a proportion of cement, if needed, to allow for the production of landscaping products wherein carbon dioxide is used as the curing agent. In other words, all or a majority of the cement is replaced by steel slag. Carbon dioxide is also applied to promote strength and activate the slag.

In one embodiment, the binder is consisting of steel slag.

In one embodiment, the binder is consisting essentially of steel slag.

In one embodiment, the binder is consisting of steel slag and cement, wherein the slag to cement ratio is up to 20, alternatively the ratio is up to 15 or up to 10. Preferably, the slag to cement ratio is about 7 to about 9.

In one embodiment, the landscaping products of the present disclosure preferably have a water absorption of less than about 5% and a compressive strength of about 55 MPa, or preferably 60 MPa, or higher.

In one embodiment, the landscaping product is a paver and preferably has a water absorption of less than about 5% and a compressive strength of about 55 MPa, or preferably 60 MPa, or higher.

In one embodiment, the landscaping products preferably have a compressive strength of about 55 MPa, or preferably 60 MPa, or higher.

In one embodiment, the landscaping products have a water absorption of less than about 6% and a compressive strength of about 45 MPa.

In one embodiment, the landscaping product is an architectural cast stone or a paver and has a water absorption of less than about 6% and a compressive strength of about 45 MPa.

In one embodiment, the landscaping products have a water absorption of less than about 8.5% and a compressive strength of about 20 MPa.

In one embodiment, the landscaping product is a retaining wall and has a water absorption of less than about 8.5% and a compressive strength of about 20 MPa.

**Steel Slag**

The EAF, BOF and some ladle steel slags can be used to produce paving stones as defined herein.

"Steel slag" herein refers to the slag by-product produced from steel-making manufacturers. Steel slag may include slag produced from Basic Oxygen Furnaces (BOF). Steel slag may also include slag produced from Electric Arc Furnaces (EAF). EBH slag are also contemplated as useful herein and refers to EAF-BOF Hybrid, which is a type of steel slag formed of a mixture of EAF and BOF produced slags.

Steel slag as used herein may further include ladle slag. "Ladle slag" herein refers to a type of steel slag. Ladle slag is produced as a by-product from a ladle refining operation. In various steel making processes, molten steel produced in an EAF or BOF process undergoes an additional refining process based on the quality of the desired steel. Additional fluxes and alloys are added to a ladle to remove the impurities within the steel and to produce steel with the desired properties. This operation is known as ladle refining, because it is executed in the transfer ladle. During this process, additional steel slags are generated, which are ladle slags.

It will be understood that "steel slag" as used herein excludes iron slag and blast furnace slag that are typically generated during iron production. The morphology of steel slag as used herein plays a role in reactivity with carbon dioxide. Steel slag can be reactive with carbon dioxide as it is crystalline. Steel slag containing high calcium silicates and low iron compounds would be ideal candidates to receive carbonation activation to make slag-based landscaping products. In contrast with steel slag, iron slag cannot be used as the binder (in the production of landscaping products with the $CO_2$ curing process) herein as it is quenched by water spray to make an amorphous material. This amorphous material (iron slag) is not reactive with $CO_2$.

The strength gain in steel slag is dependent on the content of calcium silicates in slag. Carbonation activation of calcium silicates of any polymorph could produce calcium-silicate hydrates intermingled with calcium carbonate crystals, thereby contributing to slag-bond strength.

## Chemical Composition of Steel Slag

The steel slag used for making landscaping products has a free lime content less than about 10%, preferably less than about 7.2%, or more preferably less than about 4% by chemical composition.

The steel slag used for making landscaping product has a cumulative calcium silicate content (ex: $C_2S$ + $C_3S$ phase concentration) of at least about 15%, or more preferably more than about 40%.

The steel slag used for making the building product has a $SiO_2$ content of at least about 6%, or more preferably at least about 15%.

## Size of Steel Slag

Coarser steel slag cannot be completely activated by carbon dioxide. The value of fineness for steel slag should be more than about 150 $m^2$/kg on a Blaine fineness assay or more preferably more than about 300 $m^2$/kg. The finer slag results in a landscaping product having appropriate mechanical properties whereas the coarse steel slag can result in a landscaping product that does not satisfy the necessary requirements.

Size distribution of the slag can be characterized as D50 of 200 microns and less, preferably 100 microns or less, or more preferably 20 microns or less.

The following table exhibits that the finer steel slag results in a higher carbon uptake and compressive strength for some samples of slags:

| | ID | Type of slag | Blaine Fineness ($kg/m^2$) | Paste: slag+water | $CO_2$ pressure (psi/MPa) | Carbon dioxide uptake (%) * | Compressive strength (MPa) |
|---|---|---|---|---|---|---|---|
| Coarse slag | SB16 | EAF+BOF | <150 | 10:1 | 73/0.50 | 7.7 | 25.8 |
| | SB20 | EAF | <150 | 12:1 | 73/0.50 | 4.3 | 16.6 |
| Fine slag | PV2 | EAF+BOF | >150 | 10:1 | 73/0.50 | 11.5 | 55.6 |

* The % basis is the weight of $CO_2$ with respect to the weight of slag (e.g. uptake of 11.5% means that 1 kg of slag can sequestrate 115 grams of carbon dioxide).

## Standardized $CO_2$ Uptake/ Compressive Strength Test - 80x80x60 mm Slag Slab

A slag suitable for use in the present disclosure preferably displays a $CO_2$ uptake of at least about 4%, preferably about 10% $CO_2$, and/or compressive strength of at least about 55 MPa preferably about 60 MPa for slag paste when measured on a slab specimen as described herein.

To assess the % $CO_2$ uptake and compressive strength of a slag as used herein, a specimen of 80x80x60 mm is compacted/ formed at a pressure of 12.5 MPa with a water-to-slag ratio of about 0.08 to about 0.15. The formed specimens are then dried with/without a fan at ambient conditions for 2 to 7 hours. The water content of the sample reduces by about 40%. The semi-dried specimen is then subjected to carbonation activation. The carbonation process is conducted using a $CO_2$ gas with a purity of 99.5%. The gas is first warmed up by a heater attached to the $CO_2$ cylinder in order to prevent blocking the gas such that it does not get into the chamber. If a heater is not used, the gas gets frozen and the supply of carbon dioxide will be interrupted. The $CO_2$ gas is then injected into the chamber to a pressure of 0.01 to 0.50 MPa for a duration of 0.2 to 24 hours. The pressure is maintained constant by the regulator so that the carbon dioxide consumed by slag products can be replenished.

The mass gain method, expressed in the following equation, estimates the mass difference before and after carbonation. The mass difference, together with water evaporated from the exothermic carbonation reaction, represents the mass gain due to carbon dioxide uptake. The carbonation reaction is exothermic in nature, and as a result some of the mixing water in the samples evaporates and condenses on the inner walls of the chamber. This water can be collected using absorbent paper and should be added to the mass of the carbonated sample since the water present in the chamber is part of the water in the original slag mass.

$$\text{CO}_2 \text{ uptake (\%)} = \frac{\text{Final mass} + \text{Mass of water loss} - \text{Initial Mass}}{\text{Mass of dry sample}}$$

The values of compressive strength should satisfy the values reported in ASTM C140, ASTM C936, ASTM C1372, ASTM C1364 and BNQ 2624-210.

**Cement**

In this disclosure, the following non-limiting list of cements can be used to produce slag-based pavers: Portland cement (Type I - Type V); Portland-Limestone Cement; Rapid hardening cement; Quick setting cement; Low heat cement; Blast-furnace slag cement; Portland-Slag Cement; High alumina cement; White cement; Colored cement; Pozzolanic cement (Portland-Pozzonlan Cement); Air entraining cement; Hydrographic cement; and Ternary Blended Cement as used herein, the cements that are useful are those that contain calcium silicate phases, specifically $C_3S$, that enable them to gain strength when reacted with water. The presence of calcium silicate phases secures the short term and long term strength development.

**Chemical Admixture**

Water reducer is added to the concrete mixture in order to increase the compressive strength, reduce water content, decrease the porosity, and reduce the water permeability. The water reducing admixture is classified as plasticizer or superplasticizer (that is a polycarboxylatebased water reducer). Any admixture that is capable of reducing the required water content by up to about 50% or increasing the compressive strength by up to about 60% can be used as water reducer in the current innovation. The admixtures used in this innovation should meet the requirements of ASTM C494 (Standard Specification for Chemical Admixtures for Concrete).

Water repellent admixtures are designed to provide integral water repellency to concrete by affecting the capillary action of water into or out of the concrete. Water repellent admixtures can perform as static pore pluggers, creating a more difficult pathway for water migration, or can perform as reactive chemicals, forming *"in situ"* hydrophobic materials that not only plug pores, but also chemically repel water from cement surfaces.

| | Type | Base | Color | Specific Gravity |
|---|---|---|---|---|
| Sika Viscocrete 2100 | Water Reducing Agent | Polycarboxylate Polymer | Light Blue Liquid | 1.09 |
| Sika AE3 | Water Repellant and Efflorescence Reducing Admixture | - | White Liquid | 0.92 |
| Sika AEA | Air Entraining Admixture | Aqueous Solution pf Organic Materials | Dark Brown Liquid | 1.01 |
| Sika W-10 | Water Repelling and Efflorescence Controlling Admixture | - | Milky White Liquid | 1.02 |

The typical range of water reducer admixture used in concrete varies from 0.2% to 3.5% of cementitious materials weight. In this practice, water reducer (Viscocrete) was used at 2.2% of steel slag weight. Water repellent admixture is typically used as 0.1-3.0% of the cementitious materials weight. As an example, water repellent in the current invention (W-10, AE-3) was added to the materials at 2.2% of steel slag weight in the current invention.

**Aggregates**

In this disclosure, the landscaping products are composed of aggregates embedded in a hard matrix of material. Aggregates can be either natural or artificial. Examples of aggregates include normal weight aggregate, natural lightweight aggregate, expanded clay aggregate, expanded shale aggregate, expanded slag aggregate, expanded steel slag aggregate, expanded iron slag aggregate, gravel aggregates, limestone aggregate and secondary aggregate. Preferably, the aggregate is granite or limestone aggregate.

In one embodiment, the ratio of the mass of aggregate (A) to the total mass of the aggregate + cement + slag

(A + C + S) ranges from 0.2 to 0.8, preferably from 0.45 to 0.6 or from 0.47 to 0.58.

**Preparation of Mixtures Prior to Curing**

In one embodiment, it is preferred that the dry part comprising the aggregate and binder (consisting of steel slag and cement) be mixed separately from the liquid part comprising water and a chemical admixture.

The dry materials can be mixed until uniformity is achieved. The chemical admixture, including water reducer or water repellant, is added to water. Liquid and dry materials are mixed also until a suitable dispersion is achieved.

In one embodiment, the mixture may have an initial water to slag ratio as high as about 0.20. The fresh mixture is then poured in the molds shaped in various forms and sizes. The precast making machine presses the fresh materials by compacting them at high pressure. The step of compacting can be effected by any conventional means such as compaction/ vibration or static compression, allowing to achieve the required density. The compaction/vibration can be as high as 12 MPa. The shaped product after molding and compaction preferably has a density of about 2000 to about 2800 kg/m$^3$.

**Pre-carbonation Drying**

In some cases, the mix proportion with an initially high water content is desired in order to obtain a smooth surface. At the same time, extra water in the fresh product prevents carbon dioxide to penetrate. In such cases, a lower pre-carbonation water to slag ratio (such as about 0.08-0.13) can be obtained from the molded mixture having a higher water to slag ratio. Further, directly curing the mixture prepared with an initial low water to slag ratio allows one to obtain a product with a rough surface. To obtain the suitable pre-carbonation water to slag ratio, the mixture with a higher water to slag ratio is initially formed (e.g. up to about 0.20). In cases where the initial and pre-carbonation water to slag ratio are the same (for instance, reference can be made to some of the examples herein where no step of "pre-drying" is reported), the two expressions can be used interchangeably.

The compacted and molded shaped product may, for example, be exposed to air for up to 7 hours. An industrial fan may also accelerate the air-drying process. The creation of several paths for the $CO_2$ penetration is the reason of pre-carbonation curing. A suitable amount of the water initially mixed with other ingredients should be removed during the air-drying process. For instance, when the initial water to slag ratio of 0.16 is used for the formation of the products, the air-drying process may be continued until the water to slag ratio drops to 0.08. The empty voids allow carbon dioxide to pass through the product while the remaining water secures the carbonation reaction.

In certain embodiments, the pre-carbonation water to slag ratio is less than about 0.20; or alternatively a suitable water to slag ratio is from about 0.08 to about 0.13, 0.14 or 0.15.

**Carbonation Curing**

The products having a suitable water to slag ratio (such as of about 0.08 to about 0.1 - such as 0.13, 0.14 or 0.15) should be cured in presence of a $CO_2$ environment. The purity of carbon dioxide can be as high as of 99%. The purity of carbon dioxide can alternatively be lower such as 80%, 70%, or lower. Furthermore, flue gas with a $CO_2$ concentration of 12% can be used in production of slag-based products.

The curing period can vary from 0.2 hours to 24 hours. The pressure of carbon dioxide can be adjusted from 0.01 to 0.50 MPa. Higher pressure (e.g. up to 1 MPa) may be used in appropriate industrial settings. Higher pressure is beneficial to accelerate the carbonation reaction and ultimately results in improved technical properties.

**Carbonation Set-up**

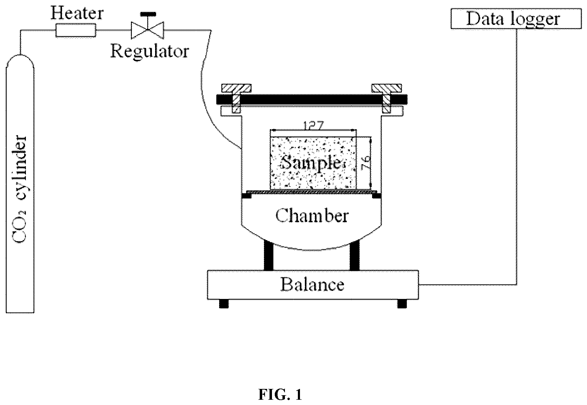

Referring to FIG 1, therein illustrated is a schematic representation of an exemplary carbonation set-up. The products to undergo carbonation curing are placed within a curing chamber. A source of $CO_2$ gas is warmed to ambient temperature by a heater and injected into the chamber. The pressure of $CO_2$ released in chamber is regulated by a regulator. A balance and data logger may be further provided.

The density of final products ($CO_2$-cured products) is measured as about 2000 to about 2800 kg/m$^3$.

In one embodiment, there is provided a process for preparing a landscaping product comprising:

   i) mixing a dry part and a liquid part; wherein said dry part is comprising an aggregate and a binder, wherein said binder is consisting of steel slag and optionally cement; and wherein said liquid part is comprising water and a chemical admixture selected from water repellents, water reducers, air entraining admixture and efflorescence reducing/controlling admixture, wherein said water reducers are meeting the requirements of ASTM C494;
   ii) molding and compacting the mixture of step i) to a shaped product having an initial water to slag ratio W/S;

iii) optionally reducing the initial water to slag ratio W/S of said shaped product of step ii) to provide a shaped product having a pre-carbonation water to slag ratio W/S; and

iv) curing the shaped product of step ii) or iii) with carbon dioxide to provide said landscaping product.

In one embodiment, there is provided a process for preparing a landscaping product comprising:

i) mixing a dry part and a liquid part; wherein said dry part is comprising an aggregate and a binder, wherein said binder is consisting of steel slag and cement and wherein said liquid part is comprising water and a chemical admixture selected from water repellents, water reducers, air entraining admixture and efflorescence reducing/controlling admixture, wherein said water reducers are meeting the requirements of ASTM C494;

ii) molding and compacting the mixture of step i) to a shaped product having an initial water to slag ratio;

iii) optionally reducing the initial water to slag ratio of said shaped product of step ii) to provide a shaped product having a pre-carbonation water to slag ratio; and

iv) curing the shaped product of step ii) or iii) with carbon dioxide to provide said landscaping product.

In one embodiment, there is provided a process for preparing a landscaping product (such as a paver) comprising:

i) mixing a dry part; and a liquid part;

wherein said dry part is comprising an aggregate (preferably granite or limestone aggregate) and a binder, wherein said binder is consisting of steel slag and optionally cement, wherein the slag (such as BOF, EAF, Ladle slag or EAF-BOF hybrid slag) has a free lime content less than about 10% and a cumulative calcium silicate content (ex: $C_2S + C_3S$ phase concentration) of at least about 15%, a fineness of about 150 $m^2$/kg or higher on a Blaine fineness, and wherein the cement is a Portland cement having calcium silicate phase, specifically $C_3S$; and

wherein said liquid part is comprising water and a water reducer meeting the requirements of ASTM C494;

wherein the slag to cement (S/C) ratio is up to 20, alternatively the ratio is up to 15 or up to 10 or preferably about 7 to about 9, and

the ratio of the mass of aggregate (A) to the total mass of the aggregate + cement + slag (A + C + S) is ranging from 0.2 to 0.8, preferably from 0.45 to 0.6;

ii) molding and compacting the mixture of step i) to a shaped product having an initial water to slag ratio (W/S), such as a W/S of up to about 0.20;

iii) when the water to slag ratio is higher than about 0.08-0.15 or 0.08-0.14 or 0.08-0.13, optionally reducing the initial water to slag ratio of said shaped product of step ii) to provide a shaped product having a pre-carbonation water to slag ratio of about 0.08-0.15 or 0.08-0.14 or 0.08-0.13; and

iv) curing the shaped product of step ii) or iii) with carbon dioxide to provide said landscaping product.

In one embodiment, there is provided a process for preparing a landscaping product (such as a paver) comprising:

i) mixing a dry part; and a liquid part;

wherein said dry part is comprising an aggregate (preferably granite or limestone aggregate) and a binder, wherein said binder is consisting of steel slag and cement, wherein the slag (such as BOF, EAF, Ladle slag or EAF-BOF hybrid slag) has a free lime content less than about 10% and a cumulative calcium silicate content (ex: $C_2S + C_3S$ phase concentration) of at least about 15%, a fineness of about 150 $m^2$/kg or higher on a Blaine fineness, and wherein the cement is a Portland cement having calcium silicate phase, specifically $C_3S$; and

wherein said liquid part is comprising water and a water reducer meeting the requirements of ASTM C494;

wherein the slag to cement (S/C) ratio is up to 20, alternatively the ratio is up to 15 or up to 10 or preferably about 7 to about 9, and

the ratio of the mass of aggregate (A) to the total mass of the aggregate + cement + slag (A + C + S) is ranging from 0.2 to 0.8, preferably from 0.45 to 0.6;

ii) molding and compacting the mixture of step i) to a shaped product having an initial water to slag ratio (W/S), such as a W/S of up to about 0.20;

iii) when the water to slag ratio is higher than about 0.08-0.13, optionally reducing the initial water to slag ratio of said shaped product of step ii) to provide a shaped product having a pre-carbonation water to slag ratio of about 0.08-0.15 or 0.08-0.14 or 0.08-0.13; and

iv) curing the shaped product of step ii) or iii) with carbon dioxide to provide said landscaping product.

In one embodiment, there is provided a landscaping product comprising:

a) an aggregate;
b) a chemical admixture selected from water repellents, water reducers, air entraining admixture and efflorescence reducing/controlling admixture, wherein said water reducers are meeting the requirements of ASTM C494, and
c) a binder consisting of steel slag and cement.

In one embodiment, there is provided a landscaping product (such as a paver) comprising:

a) an aggregate, preferably granite or limestone aggregate;
b) a water reducer meeting the requirements of ASTM C494, and
c) a binder consisting of steel slag and optionally cement, wherein the slag (such as BOF, EAF, ladle slag or EAF-BOF hybrid slag) has a free lime content less than about 10% and a cumulative calcium silicate content (ex: $C_2S$ +$C_3S$ phase concentration) of at least about 15%, a fineness of about 150 $m^2$/kg or higher on a Blaine fineness and wherein the cement is a Portland cement;

the landscaping products have a water absorption of less than about 8.5% (or less than about 6% or preferably less than about 5%) and a compressive strength of about 20 MPa (or about 55 MPa or preferably 60 MPa or higher)
wherein the slag to cement (S/C) ratio of up to 20, alternatively the ratio is up to 15 or up to 10 or preferably from about 7 to about 9.
the ratio of the mass of aggregate (A) to the total mass of the aggregate + cement + slag (A + C + S) is ranging from 0.2 to 0.8, preferably from 0.45 to 0.6.

In one embodiment, there is provided a landscaping product (such as a paver) comprising:

a) an aggregate, preferably granite or limestone aggregate;
b) a water reducer meeting the requirements of ASTM C494, and
c) a binder consisting of steel slag and cement, wherein the slag (such as BOF, EAF, ladle slag or EAF-BOF hybrid slag) has a free lime content less than about 10% and a cumulative calcium silicate content (ex: $C_2S$ +$C_3S$ phase concentration) of at least about 15%, a fineness of about 150 $m^2$/kg or higher on a Blaine fineness and wherein the cement is a Portland cement;

the landscaping products have a water absorption of less than about 8.5% (or less than about 6% or preferably less than about 5%) and a compressive strength of about 20 MPa (or about 55 MPa or preferably 60 MPa or higher)
wherein the slag to cement (S/C) ratio of up to 20, alternatively the ratio is up to 15 or up to 10 or preferably from about 7 to about 9.
the ratio of the mass of aggregate (A) to the total mass of the aggregate + cement + slag (A + C + S) is ranging from 0.2 to 0.8, preferably from 0.45 to 0.6.

## Examples

The dry materials comprising the slag (the hybrid combination of BOF and EAF slag), Portland cement and granite aggregates were mixed until they were uniformly distributed (typically up to 2 minutes for the batch sizes used herein).

The Portland cement used to produce paving stone of the following examples has the following chemical composition (%)

|  | CaO | $SiO_2$ | $Al_2O_3$ | $Fe_2O_3$ | $Na_2O$ | $K_2O$ |
| --- | --- | --- | --- | --- | --- | --- |
| Portland cement (%) | 61.0-67.0 | 19.0-23.0 | 2.5-6.0 | 0.0-6.0 | <0.01 | 0.01 |

The chemical composition of representative steel slag batches is shown in the table below. The table also includes an example of an "unreactive" slag composition as reference:

**Chemical Composition of Steel Slag (%)**

| | Slag Type | $SiO_2$ | $Al_2O_3$ | $Fe_2O_3$ | Mn O | MgO | CaO | $Na_2O$ | $C_2S+C_3S$ | Free Lime |
|---|---|---|---|---|---|---|---|---|---|---|
| Reactiv e slag | EAF | 9.41 | 10.78 | 24.22 | 3.84 | 9.77 | 35.2 3 | 0.03 | 37.2 | 0.8 |
| | EBH | 12.4 7 | 6.87 | 19.48 | 3.84 | 10.5 7 | 39.0 8 | <0.0 1 | 51.6 | 0.8 |
| | Ladle | 12.3 5 | 16.55 | 0.79 | - | 3.96 | 65.2 3 | 0.08 | 40.6 | 7.2 |
| Non-reactive Slag | Ladle | 6.21 | 23.17 | 3.55 | - | 5.04 | 57.5 5 | 0.16 | 12.9 | 10.8 |

In the examples herein, slag size distribution can be characterized as D50=18.8 micron and D90=86.7 micron. D50=18.8 microns means that 50 percent of slag grains are smaller than 18.8 microns and D90=86.7 microns means that 90 percent of slag particles are smaller than 86.7 microns. The particle size distribution (PSD) and finesse of steel slags can be evaluated by considering these standards: ASTM C204 (Standard Test Methods for Fineness of Hydraulic Cement by Air-Permeability Apparatus), ASTM C110 (Standard Test Methods for Physical Testing of Quicklime, Hydrated Lime, and Limestone), ASTM C115 (Standard Test Method for Fineness of Portland Cement by the Turbidimeter), ASTM C311 (Standard Test Methods for Sampling and Testing Fly Ash or Natural Pozzolans for Use in Portland-Cement Concrete), ASTM D197(Standard Test Method for Sampling and Fineness Test of Pulverized Coal) and ASTM E2651 (Standard Guide for Powder Particle Size Analysis).

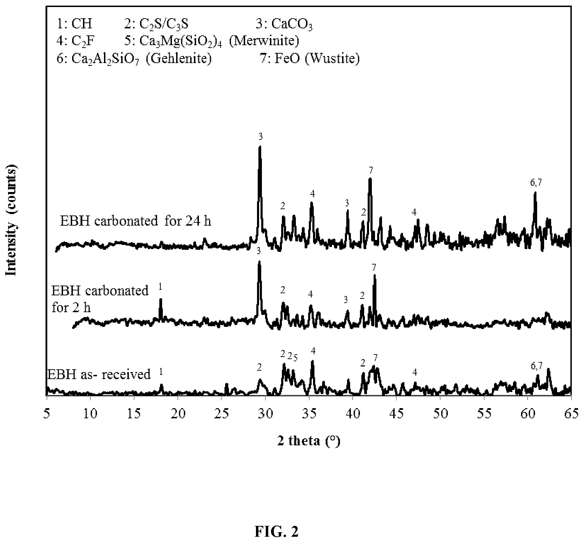

XRD patterns of carbonated EBH slag panels are shown in Fig. 2. The basic mineral components that appear in the diffractograms are calcium silicates, calcium magnesium silicate (merwanite), gehlenite and iron compounds. The presence of calcium carbonate and the reduction of calcium silicate phases ($C_2S$ and $C_3S$) were indicative of the carbonation reaction. Prolonged carbonation of 24 hours produced more calcium carbonate.

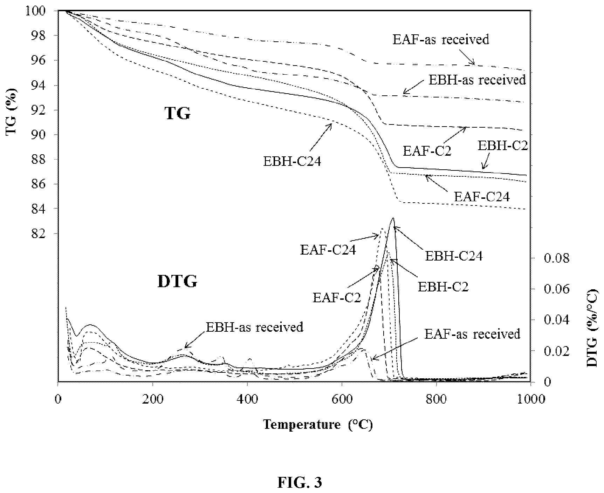

The thermogravimetry (TG) and differential thermogravimetric (DTG) curves for the as-received and carbonated EAF-BOF hybrid slag are presented in Fig. 3. The water loss in hydration product and $CaCO_3$ content of slag panels increased with an increase in the carbonation time from 2 h to 24 h. An increase in the water loss content indicates the formation of more hydration products.

The chemical admixture was added to water. Liquid and dry materials were mixed until they were uniformly dispersed (typically about 5 minutes for the batch sizes used herein). The mixture was then poured in the mold. A 80x80x80 mm mold and 50x50x50 mm mold were used to produce a paver; however, molds with any size and shape can be used. A MTS machine was used as the precast making machine to form the pavers by compacting the mixture at pressure of about 12 MPa. The pressure compacted the mixture in order to produce a product with the density of 2600 kg/m³.

A Pre-carbonation curing step is optionally performed using an industrial fan for the duration of time specified in the tables below. The carbonation curing step is conducted in the presence of 99%-pure $CO_2$ gas environment for a period of 24 hours under a pressure of 60 psi (0.41 MPa).

| ID | Water/slag ratio of dried product (before carbonation) | Water loss due to the pre-drying process (%) |
|---|---|---|
| PV77 | 0.10 | 30 |
| PV81 | 0.11 | 29 |
| PV85 | 0.10 | 32 |

**Reference Example**

The properties of the reference product (product with no cement nor chemical admixture), PV11, indicate that the compressive strength is 49,3 MPa and water absorption is 8.6%. (Table 1)

**Examples of Embodiments Using Retaining Wall**

Addition of chemical admixture by 1% weight of the product to the reference product PV11 (no cement nor admixture) reduces the water absorption of products, without substantially affecting the compressive strength which remains at the level of that of PV11 in Table 1.

**Table 1**

| | Mix proportion (kg/m$^3$) | | | | | | | | |
|---|---|---|---|---|---|---|---|---|---|
| **ID** | **Slag** | **Aggregate** | **Cement** | **Water (w/s)** | **Viscocrete** | **AE-3** | **Pre-drying (h)** | **Compressive Strength (MPa)** | **Water Absorption (%)** |
| PV11 | 1120 | 1120 | 0 | 168 (0.15) | 0 | 0 | 0 | 49.3 | 8.6 |
| PV101 | 1120 | 1120 | 0 | 124 (0.12) | 25 | 0 | 0 | 47.0 | 6.1 |

**Examples of Embodiments Using Paver**

The mix proportion proposed for retaining walls needed to be modified in order to meet the paver requirements. To improve the properties of paving stone, two different types of water repellent (W-10 and AE-3) were added to the mix containing Portland cement (PV25). The compressive strength and water absorption of PV59 and PV77 have an improved profile compared to PV11 and PV25. (Table 2)

The addition of Viscocrete (water reducer) to the mix (PV63) improved the technical properties of the resulting product. As shown in the following table, the compressive strength and water absorption are improved compared to PV11 (no cement nor admixture) and also PV25 (no admixture). (Table 2)

**Table 2**

| | | | | | | | | | | Mix proportion (kg/m³) | | |
|---|---|---|---|---|---|---|---|---|---|---|---|---|
| ID | Slag * (S/C) | Aggregate | Cement | Water (wls) | W_ 10 | Viscocrete | AE- 3 | Pre-drying (h) | Compaction | Compressive Strength (MPa) | Water Absorption (%) |
| PV25 | 1120 (9) | 1120 | 125 | 310 (0.28) | 0 | 0 | 0 | 2 | Static | 48.0 | 5.7 |
| PV59 | 1120 (9) | 1120 | 125 | 142 (0.13) | 25 | 0 | 0 | 2 | Compactio n /Vibration | 60.0 | 4.1 |
| PV63 | 1120 (9) | 1120 | 125 | 164 (0.15) | 0 | 25 | 0 | 2 | Compactio n /Vibration | 50.5 | 3.6 |
| PV77 | 1120 (9) | 1120 | 125 | 164 (0.15) | 0 | 0 | 25 | 2 | Static | 56.3 | 4.3 |

The additional examples compiled in Tables 3 and 4 illustrate the beneficial effect of the mixtures of this disclosure in producing products that meet high standards.

**Table 3**

**Mix proportion (kg/m³)**

| ID | Slag *(SIC) | Aggregate | Cement | W-10 | Water** (i-W/S) | Viscocrete | AE-3 | Pre-drying (h) ***(p-w/s) | AEA | Compaction |
|---|---|---|---|---|---|---|---|---|---|---|
| PV54 | 875 (7) | 1375 | 125 | - | 120 (0.14) | 12.5 | - | 2 | - | Vibration! Compaction |
| PV62 | 1000 (8) | 1250 | 125 | - | 131 (0.13) | 25 | - | 2 | - | Vibration! Compaction |
| PV65 | 1120 (9) | 1120 | 124 | - | 142 (0.13) | - | 25 | - | - | Vibration! Compaction |
| PV81 | 980 (8) | 1225 | 123 | - | 142 (0.13) | 25 | - | 7 | - | Vibration! Compaction |
| PV85 | 1097 (9) | 1097 | 122 | - | 160 (0.15) | - | 24 | 7 | - | Static 20 MPa |
| PV95 | 1120 (9) | 1120 | 124 | - | 142 (0.13) | - | 25 | - | 12 | Vibration! Compaction |

* (S/C): Slag to cement ratio
** (i-W/S): Initial water to slag ratio
*** (p- W/S): pre-carbonation water to slag ratio

17

**Table 4:** Technical Performance of Selected Paving Stones:

|  | PV54 | PV59 | PV62 | PV63 | PV65 | PV77 | PV81 | PV85 | PV95 |
|---|---|---|---|---|---|---|---|---|---|
| Compressive Strength (MPa) | >60 | >60 | >60 | 50.5 | >60 | 56.3 | 72.9 | - | 58.8 |
| Water Absorption (%) | 4.5 | 4.1 | 4.3 | 3.6 | 3.7 | 4.3 | 3.5 | 3.7 | - |
| Freeze and Thaw (Mass Loss) | - | - | - | - | - | - | - | Negligible | Negligible |

**Claims**

1. A process for preparing landscaping products, such as a paver, comprising:

   i) mixing a dry part; and a liquid part; wherein said dry part is comprising an aggregate and a binder, wherein said binder is consisting of steel slag and optionally cement; and wherein said liquid part is comprising water and a chemical admixture selected from water repellents, water reducers, air entraining admixture and efflorescence reducing/controlling admixture, wherein said water reducers are meeting the requirements of ASTM C494;
   ii) molding and compacting the mixture of step i) to a shaped product having an initial water to slag ratio W/S;
   iii) optionally reducing the initial water to slag ratio W/S of said shaped product of step ii) to provide a shaped product having a pre-carbonation water to slag ratio W/S; and
   iv) curing the shaped product of step ii) or iii) with carbon dioxide to provide said landscaping products.

2. The process of claim 1, wherein said steel slag is a BOF, an EAF or ladle slag.

3. The process of claim 1 or 2, wherein said steel slag has a cumulative calcium silicate content of at least about 15%, or more preferably more than about 40%.

4. The process of any one of claims 1 to 3, wherein said steel slag has a fineness of more than about 150 $m^2$/kg on a Blaine fineness assay.

5. The process of any one of claims 1 to 4, wherein said cement contains a calcium silicate phase.

6. The process of any one of claims 1 to 5, wherein said aggregate is normal weight aggregate, natural lightweight aggregate, expanded clay aggregate, expanded shale aggregate, expanded slag aggregate, expanded steel slag aggregate, expanded iron slag aggregate, gravel aggregates, limestone aggregate or secondary aggregate.

7. The process of any one of claims 1 to 6, wherein the initial water to slag ratio W/S is up to about 0.20 and wherein the pre-carbonation water to slag ratio W/S is from about 0.08-0.15.

8. The process according to claim 1 comprising:

   i) mixing a dry part; and a liquid part;

   wherein said dry part is comprising an aggregate, preferably granite or limestone aggregate, and a binder, wherein said binder is consisting of steel slag and cement, wherein the slag, such as BOF, EAF, Ladle slag or EAF-BOF hybrid slag, has a free lime content less than about 10% and a cumulative calcium silicate content of at least about 15%, a fineness of about 150 $m^2$/kg or higher on a Blaine fineness, and wherein the cement is a Portland cement having calcium silicate phase, specifically $C_3S$; and wherein said liquid part is comprising water and a water reducer meeting the requirements of ASTM C494;
   wherein the slag to cement S/C ratio is up to 20, alternatively the ratio is up to 15 or up to 10 or preferably about 7 to about 9, and
   the ratio of the mass of aggregate A to the total mass of the aggregate + cement + slag A + C + S is ranging from 0.2 to 0.8, preferably from 0.45 to 0.6;

   ii) molding and compacting the mixture of step i) to a shaped product having an initial water to slag ratio W/S, such as a W/S of up to about 0.20;

iii) when the water to slag ratio W/S is higher than about 0.08-0.15, optionally reducing the initial water to slag ratio W/S of said shaped product of step ii) to provide a shaped product having a pre-carbonation water to slag ratio W/S of about 0.08-0.15; and

iv) curing the shaped product of step ii) or iii) with carbon dioxide to provide said landscaping product.

9. A carbon dioxide cured landscaping product, such as a paver, comprising:

a) an aggregate;

b) a chemical admixture selected from water repellents, water reducers, air entraining admixture and efflorescence reducing/controlling admixture, wherein said water reducers are meeting the requirements of ASTM C494, and

c) a binder consisting of steel slag and optionally cement.

10. The carbon dioxide cured landscaping product of claim 9, wherein said binder is consisting of steel slag and cement.

11. The carbon dioxide cured landscaping product of claim 9 or 10, wherein the ratio of the mass of aggregate A to the total mass of the aggregate + cement + slag A + C + S ranges from 0.2 to 0.8.

12. The carbon dioxide cured landscaping product of any one of claims 9 to 11, wherein said steel slag is a BOF, EAF or a ladle slag.

13. The carbon dioxide cured landscaping product of any one of claims 9 to 12, wherein said steel slag has a cumulative calcium silicate content of at least about 15%, or more preferably more than about 40%.

14. The carbon dioxide cured landscaping product of any one of claims 9 to 13, wherein said steel slag has a fineness of more than about 150 $m^2$/kg on a Blaine fineness assay.

15. The carbon dioxide cured landscaping product of any one of claims 9 to 14, wherein said aggregate is normal weight aggregate, natural lightweight aggregate, expanded clay aggregate, expanded shale aggregate, expanded slag aggregate, expanded steel slag aggregate, expanded iron slag aggregate, gravel aggregate, limestone aggregate and secondary aggregate, preferably, the aggregate is granite or limestone aggregate.

**Patentansprüche**

1. Verfahren zur Herstellung von Landschaftsbauprodukten, wie z.B. einem Pflasterstein, umfassend:

i) Mischen eines trockenen Teils; und eines flüssigen Teils; wobei der trockene Teil einen Zuschlagstoff und ein Bindemittel umfasst, wobei das Bindemittel aus Stahlschlacke und gegebenenfalls Zement besteht, und wobei der flüssige Teil Wasser und ein chemisches Zusatzmittel umfasst, das aus wasserabweisenden Mitteln, wasserreduzierenden Mitteln, luftporenbildendem Zusatzmittel und Ausblühungs-verminderndem/-kontrollierendem Zusatzmittel ausgewählt ist, wobei die wasserreduzierenden Mittel die Anforderungen von ASTM C494 erfüllen;

ii) Formen und Verdichten der Mischung aus Schritt i) zu einem geformten Produkt mit einem anfänglichen Wasser-zu-Schlacke-Verhältnis W/S;

iii) gegebenenfalls Reduzieren des anfänglichen Wasser-zu-Schlacke-Verhältnisses W/S des geformten Produkts aus Schritt ii), um ein geformtes Produkt mit einem Wasser-zu-Schlacke-Verhältnis W/S vor der Carbonisierung bereitzustellen; und

iv) Aushärten des geformten Produkts aus Schritt ii) oder iii) mit Kohlendioxid, um die Landschaftsbauprodukte bereitzustellen.

2. Verfahren nach Anspruch 1, wobei die Stahlschlacke ein BOF, ein EAF oder eine Pfannenschlacke ist.

3. Verfahren nach Anspruch 1 oder 2, wobei die Stahlschlacke einen kumulativen Calciumsilikatgehalt von mindestens etwa 15%, oder stärker bevorzugt von mehr als etwa 40% aufweist.

4. Verfahren nach einem der Ansprüche 1 bis 3, wobei die Stahlschlacke eine Feinheit von mehr als etwa 150 $m^2$/kg in einem Blaine-Feinheits-Assay aufweist.

5. Verfahren nach einem der Ansprüche 1 bis 4, wobei der Zement eine Calciumsilikatphase enthält.

6. Verfahren nach einem der Ansprüche 1 bis 5, wobei der Zuschlagstoff normalgewichtiger Zuschlagstoff, natürlicher leichtgewichtiger Zuschlagstoff, expandierter Tonzuschlagstoff, expandierter Schieferzuschlagstoff, expandierter Schlackenzuschlagstoff, expandierter Stahlschlackenzuschlagstoff, expandierter Eisenschlackenzuschlagstoff, Kieszuschlagstoffe, Kalksteinzuschlagstoff oder Sekundärzuschlagstoff ist.

7. Verfahren nach einem der Ansprüche 1 bis 6, wobei das anfängliche Wasser-zu-Schlacke-Verhältnis W/S bis zu etwa 0,20 beträgt und wobei das Wasser-zu-Schlacke-Verhältnis W/S vor der Carbonisierung zwischen etwa 0,08 und 0,15 beträgt.

8. Verfahren nach Anspruch 1, umfassend:

   i) Mischen eines trockenen Teils; und eines flüssigen Teils;

   wobei der trockene Teil einen Zuschlagstoff, vorzugsweise Granit- oder Kalkstein-Zuschlagstoff, und ein Bindemittel umfasst, wobei das Bindemittel aus Stahlschlacke und Zement besteht, wobei die Schlacke, wie BOF, EAF, Pfannenschlacke oder EAF-BOF-Hybridschlacke, einen freien Kalkgehalt von weniger als etwa 10% und einen kumulativen Calciumsilikatgehalt von mindestens etwa 15%, eine Feinheit von etwa 150 m$^2$/kg oder höher auf einer Blaine-Feinheit aufweist, und wobei der Zement ein Portlandzement mit Calciumsilikatphase, insbesondere $C_3S$, ist; und
   wobei der flüssige Teil Wasser und ein wasserreduzierendes Mittel umfasst, das die Anforderungen von ASTM C494 erfüllt; wobei das Schlacke-zu-Zement-Verhältnis S/C bis zu 20 beträgt, alternativ das Verhältnis bis zu 15 oder bis zu 10 oder vorzugsweise etwa 7 bis etwa 9 beträgt, und
   das Verhältnis der Masse des Zuschlagstoffes A zur Gesamtmasse von Zuschlagstoff + Zement + Schlacke A + C + S im Bereich von 0,2 bis 0,8, vorzugsweise von 0,45 bis 0,6 liegt;

   ii) Formen und Verdichten der Mischung aus Schritt i) zu einem geformten Produkt mit einem anfänglichen Wasser-zu-Schlacke-Verhältnis W/S, wie einem W/S von bis zu etwa 0,20;
   iii) wenn das Wasser-zu-Schlacke-Verhältnis W/S höher als etwa 0,08-0,15 ist, gegebenenfalls Verringern des anfänglichen Wasser-zu-Schlacke-Verhältnisses W/S des geformten Produkts von Schritt ii), um ein geformtes Produkt mit einem Wasser-zu-Schlacke-Verhältnis W/S vor der Carbonisierung von etwa 0,08-0,15 bereitzustellen; und
   iv) Aushärten des geformten Produkts von Schritt ii) oder iii) mit Kohlendioxid, um das Landschaftsbauprodukt bereitzustellen.

9. Mit Kohlendioxid gehärtetes Landschaftsbauprodukt, wie z.B. ein Pflasterstein, umfassend:

   a) einen Zuschlagstoff;
   b) ein chemisches Zusatzmittel, ausgewählt aus wasserabweisenden Mitteln, wasserreduzierenden Mitteln, luftporenbildendem Zusatzmittel und Ausblühungs-verminderndem/-kontrollierendem Zusatzmittel, wobei die wasserreduzierenden Mittel den Anforderungen von ASTM C494 entsprechen, und
   c) ein Bindemittel, bestehend aus Stahlschlacke und gegebenenfalls Zement.

10. Mit Kohlendioxid gehärtetes Landschaftsbauprodukt nach Anspruch 9, wobei das Bindemittel aus Stahlschlacke und Zement besteht.

11. Mit Kohlendioxid gehärtetes Landschaftsbauprodukt nach Anspruch 9 oder 10, wobei das Verhältnis der Masse des Zuschlagstoffes A zur Gesamtmasse von Zuschlagstoff + Zement + Schlacke A + C + S im Bereich von 0,2 bis 0,8 liegt.

12. Mit Kohlendioxid gehärtetes Landschaftsbauprodukt nach einem der Ansprüche 9 bis 11, wobei die Stahlschlacke eine BOF, EAF oder eine Pfannenschlacke ist.

13. Mit Kohlendioxid gehärtetes Landschaftsbauprodukt nach einem der Ansprüche 9 bis 12, wobei die Stahlschlacke einen kumulativen Calciumsilikatgehalt von mindestens etwa 15% oder stärker bevorzugt von mehr als etwa 40% aufweist.

14. Mit Kohlendioxid gehärtetes Landschaftsbauprodukt nach einem der Ansprüche 9 bis 13, wobei die Stahlschlacke eine Feinheit von mehr als etwa 150 m$^2$/kg in einem Blaine-Feinheits-Assay aufweist.

15. Durch Kohlendioxid gehärtetes Landschaftsbauprodukt nach einem der Ansprüche 9 bis 14, wobei der Zuschlagstoff normalgewichtiger Zuschlagstoff, natürlicher leichtgewichtiger Zuschlagstoff, expandierter Tonzuschlagstoff, expandierter Schieferzuschlagstoff, expandierter Schlackenzuschlagstoff, expandierter Stahlschlackenzuschlagstoff, expandierter Eisenschlackenzuschlagstoff, Kieszuschlagstoff, Kalksteinzuschlagstoff und Sekundärzuschlagstoff ist, vorzugsweise der Zuschlagstoff Granit- oder Kalksteinzuschlagstoff ist.

**Revendications**

1. Procédé de préparation de produits d'aménagement paysager, tels qu'un pavé, comprenant :

    i) le mélange d'une partie sèche ; et d'une partie liquide ; dans lequel ladite partie sèche comprend un agrégat et un liant, dans lequel ledit liant est constitué de laitier d'acier et optionnellement de ciment ; et dans lequel ladite partie liquide comprend de l'eau et un adjuvant chimique choisi parmi des hydrofuges, des réducteurs d'eau, des adjuvants d'entraînement d'air et des adjuvants de réduction/régulation de l'efflorescence, dans lequel lesdits réducteurs d'eau répondent aux exigences de la norme ASTM C494 ;
    ii) le moulage et le compactage du mélange de l'étape i) en un produit façonné ayant un rapport eau/laitier W/S initial ;
    iii) optionnellement la réduction du rapport eau/laitier W/S initial dudit produit façonné de l'étape ii) pour fournir un produit façonné ayant un rapport eau/laitier W/S de pré-carbonatation ; et
    iv) le durcissement du produit façonné de l'étape ii) ou iii) avec du dioxyde de carbone pour fournir lesdits produits d'aménagement paysager.

2. Procédé selon la revendication 1, dans lequel ledit laitier d'acier est un BOF, un EAF ou un laitier de poche.

3. Procédé selon la revendication 1 ou 2, dans lequel ledit laitier d'acier a une teneur cumulée en silicate de calcium d'au moins environ 15 %, ou de manière davantage préférée de plus d'environ 40 %.

4. Procédé selon l'une quelconque des revendications 1 à 3, dans lequel ledit laitier d'acier a une finesse de plus de 150 m$^2$/kg selon un test de finesse de Blaine.

5. Procédé selon l'une quelconque des revendications 1 à 4, dans lequel ledit ciment contient une phase de silicate de calcium.

6. Procédé selon l'une quelconque des revendications 1 à 5, dans lequel ledit agrégat est un agrégat de poids normal, un agrégat léger naturel, un agrégat d'argile expansé, un agrégat de schiste expansé, un agrégat de laitier expansé, un agrégat de laitier d'acier expansé, un agrégat de laitier de fer expansé, des agrégats de gravier, un agrégat de pierre à chaux ou un agrégat secondaire.

7. Procédé selon l'une quelconque des revendications 1 à 6, dans lequel le rapport eau/laitier W/S initial peut atteindre environ 0,20 et dans lequel le rapport eau/laitier W/S de pré-carbonatation est d'environ 0,08 à 0,15.

8. Procédé selon la revendication 1 comprenant :

    i) le mélange d'une partie sèche ; et d'une partie liquide ;

    dans lequel ladite partie sèche comprend un agrégat, de préférence un agrégat de granite ou de pierre à chaux, et un liant, dans lequel ledit liant est constitué de laitier d'acier et de ciment, dans lequel le laitier, tel que le BOF, l'EAF, le laitier de poche ou le laitier hybride EAF-BOF, a une teneur en chaux libre inférieure à environ 10 % et une teneur cumulée en silicate de calcium d'au moins environ 15 %, une finesse d'environ 150 m$^2$/kg ou plus sur une finesse Blaine, et dans lequel le ciment est un ciment Portland ayant une phase de silicate de calcium, spécifiquement $C_3S$ ; et dans lequel ladite partie liquide comprend de l'eau et un réducteur d'eau répondant aux exigences de la norme ASTM C494 ;
    dans lequel le rapport laitier/ciment S/C peut atteindre 20, en variante le rapport peut atteindre 15 ou 10 ou de préférence environ 7 à environ 9, et
    le rapport de la masse de l'agrégat A sur la masse totale de l'agrégat + ciment + laitier A + C + S varie de 0,2 à 0,8, de préférence de 0,45 à 0,6 ;

ii) le moulage et le compactage du mélange de l'étape i) en un produit façonné ayant un rapport eau/laitier W/S initial, tel qu'un W/S pouvant atteindre environ 0,20 ;

iii) lorsque le rapport eau/laitier W/S est supérieur à environ 0,08 à 0,15, optionnellement la réduction du rapport eau/laitier W/S initial dudit produit façonné de l'étape ii) pour fournir un produit façonné ayant un rapport eau/laitier W/S de pré-carbonatation d'environ 0,08 à 0,15 ; et

iv) le durcissement du produit façonné de l'étape ii) ou iii) avec du dioxyde de carbone pour fournir ledit produit d'aménagement paysager.

9. Produit d'aménagement paysager durci au dioxyde de carbone, tel qu'un pavé, comprenant :

a) un agrégat ;
b) un adjuvant chimique choisi parmi des hydrofuges, des réducteurs d'eau, des adjuvants d'entraînement d'air et des adjuvants de réduction/régulation de l'efflorescence, dans lequel lesdits réducteurs d'eau répondent aux exigences de la norme ASTM C494, et
c) un liant constitué de laitier d'acier et optionnellement de ciment.

10. Produit d'aménagement paysager durci au dioxyde de carbone selon la revendication 9, dans lequel ledit liant est constitué de laitier d'acier et de ciment.

11. Produit d'aménagement paysager durci au dioxyde de carbone selon la revendication 9 ou 10, dans lequel le rapport de la masse de l'agrégat A sur la masse totale de l'agrégat + ciment + laitier A + C + S varie de 0,2 à 0,8.

12. Produit d'aménagement paysager durci au dioxyde de carbone selon l'une quelconque des revendications 9 à 11, dans lequel ledit laitier d'acier est un BOF, un EAF ou un laitier de poche.

13. Produit d'aménagement paysager durci au dioxyde de carbone selon l'une quelconque des revendications 9 à 12, dans lequel ledit laitier d'acier a une teneur cumulée en silicate de calcium d'au moins environ 15 %, ou de manière davantage préférée de plus d'environ 40 %.

14. Produit d'aménagement paysager durci au dioxyde de carbone selon l'une quelconque des revendications 9 à 13, dans lequel ledit laitier d'acier a une finesse de plus de 150 m$^2$/kg selon un test de finesse de Blaine.

15. Produit d'aménagement paysager durci au dioxyde de carbone selon l'une quelconque des revendications 9 à 14, dans lequel ledit agrégat est un agrégat de poids normal, un agrégat léger naturel, un agrégat d'argile expansé, un agrégat de schiste expansé, un agrégat de laitier expansé, un agrégat de laitier d'acier expansé, un agrégat de laitier de fer expansé, un agrégat de gravier, un agrégat de pierre à chaux et un agrégat secondaire, de préférence, l'agrégat est un agrégat de granite ou de pierre à chaux.

**FIG. 1**

1: CH      2: $C_2S/C_3S$        3: $CaCO_3$
4: $C_2F$      5: $Ca_3Mg(SiO_2)_4$ (Merwinite)
6: $Ca_2Al_2SiO_7$ (Gehlenite)        7: FeO (Wustite)

FIG. 2

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015139121 A

- WO 2016082030 A

**Non-patent literature cited in the description**

- **MAHOUTIAN MEHRDAD et al.** *Materials and structures,* July 2014, vol. 48 (9), 3075-3085